# EUROPÄISCHE PATENTSCHRIFT

(11) **EP 2 746 593 B1**
(45) Veröffentlichungstag und Bekanntmachung des Hinweises auf die Patenterteilung: **12.02.2020**
(21) Anmeldenummer: 12008397.7
(22) Anmeldetag: 18.12.2012
(51) Int. Cl.: F15B 13/08, F16K 37/00, F16K 27/00

(54) **Ventilanordnung**
Valve assembly
Agencement de vannes

(43) Veröffentlichungstag der Anmeldung: 25.06.2014
(73) Patentinhaber: FESTO AG & Co. KG, 73734 Esslingen (DE)
(72) Erfinder: Wenske, Eduard, 70806 Kornwestheim (DE); Schuppler, Swen, 70174 Stuttgart (DE); Kühbauch, Heiko, 73257 Köngen (DE)
(74) Vertreter: Patentanwälte Magenbauer & Kollegen Partnerschaft mbB

(56) Entgegenhaltungen:
- EP-B1- 1 120 574
- WO-A2-01/42664
- DE-A1- 10 327 750
- DE-A1-102005 049 391
- DE-A1-102007 047 703
- DE-U1-202009 012 182
- US-A- 5 996 629

## Beschreibung

Die Erfindung betrifft eine Ventilanordnung, mit einem Ventilträger und mindestens einer eine elektrisch betätigbare Antriebseinrichtung aufweisenden Ventileinheit, wobei die Ventileinheit gekapselt in einem nach außen abgeschlossenen Aufnahmeraum des Ventilträgers untergebracht ist, der gemeinsam begrenzt ist von einem Grundkörper des Ventilträgers, der mit der Ventileinheit in Fluidverbindung stehende Ventilträger-Fluidkanäle aufweist, und von einem an einer Montagefläche des Grundkörpers lösbar angebrachten Verschlussdeckel des Ventilträgers, wobei der Verschlussdeckel einen Deckelkörper mit einer den Aufnahmeraum unmittelbar begrenzenden lichtundurchlässigen Begrenzungswand aufweist, die über wenigstens einen abgegrenzten lichtdurchlässigen Bereich verfügt, in dem sie lokal von mindestens einem Sichtfenster durchsetzt ist, das durch ein an dem Deckelkörper fixiertes Verschlussmittel dicht verschlossen ist.

Eine aus der EP 1 120 574 B1 bekannte Ventilanordnung dieser Art verfügt über einen Ventilträger mit einem Grundkörper und mehreren auf dem Grundkörper montierten haubenartigen Verschlussdeckeln, wobei jeder Verschlussdeckel gemeinsam mit dem Grundkörper einen nach außen abgeschlossenen Aufnahmeraum begrenzt, in dem eine elektrisch betätigbare Ventileinheit untergebracht ist. Der Verschlussdeckel hat einen Deckelkörper mit einer den Aufnahmeraum unmittelbar begrenzenden lichtundurchlässigen Begrenzungswand. Darüber hinaus verfügt jeder Verschlussdeckel über zumindest einen abgegrenzten transluzenten Bereich, der in der Lage ist, Lichtsignale hindurchzulassen, die im Innern des Aufnahmeraumes erzeugt werden, um beispielsweise den Betätigungszustand der Ventileinheit oder eine Störung zu melden. Aufgrund der Unterbringung in dem Aufnahmeraum ist die Ventileinheit zur Umgebung hin abgeschirmt und es besteht keine Gefahr, dass vor allem die elektrischen Bestandteile der Ventileinheit in Mitleidenschaft gezogen werden, wenn die Ventilanordnung einem Reinigungsprozess unter Verwendung flüssiger Reinigungsmedien unterworfen wird. Nachteilig ist allerdings, dass sonstige Informationen, die die installierte Ventileinheit betreffen, nur erhältlich sind, wenn entweder der Verschlussdeckel abgenommen wird oder vor dem Zusammenbau der Ventilanordnung eine Dokumentation hinsichtlich der technischen Zusammensetzung der Ventilanordnung erstellt worden ist.

Eine aus der DE 10 2007 047 703 A1 bekannte Ventilanordnung verfügt über einen modular aufgebauten Ventilträger mit einer Mehrzahl von Ventilträgermodulen, die jeweils einen Aufnahmeraum begrenzen, in dem eine elektrisch betätigbare Ventileinheit untergebracht ist. Der Aufnahmeraum ist gemeinsam begrenzt von einem Grundkörper und von einem an einer Montagefläche des Grundkörpers angebrachten plattenartigen Verschlussdeckel. Außen an dem Verschlussdeckel ist ein Handschalter angeordnet, durch den die im Aufnahmeraum untergebrachte Ventileinheit manuell betätigt werden kann.

Der Erfindung liegt die Aufgabe zugrunde, Maßnahmen zu treffen, die es bei einer Ventilanordnung der eingangs genannten Art erleichtern, Informationen bezüglich der installierten Ventileinheit zu erhalten.

Zur Lösung dieser Aufgabe ist erfindungsgemäß vorgesehen, dass das Verschlussmittel aus einem klaren, durchsichtigen Material besteht, so dass von außen her durch das Sichtfenster hindurch ein Einblick in den Aufnahmeraum möglich ist, wobei die Ventileinheit in einem dem Sichtfenster gegenüberliegenden Bereich permanent angeordnete alphanumerische Informationsmittel aufweist, die durch das Sichtfenster hindurch von außerhalb des Aufnahmeraumes her erkennbar sind.

Auf diese Weise lassen sich Informationen bezüglich der im Aufnahmeraum untergebrachten Ventileinheit ohne Entfernung des Verschlussdeckels und ohne Rückgriff auf eine zuvor erstellte schriftliche Dokumentation erhalten. Das in dem Verschlussdeckel ausgebildete Sichtfenster gestattet dem Bedienpersonal aufgrund seiner glasklaren, insbesondere keine Streuung bewirkenden Durchsichtigkeit einen Einblick ins Innere des Aufnahmeraumes, um beispielsweise die installierte Ventileinheit zum Zwecke einer Nachbestellung eines Ersatzproduktes zu identifizieren. Das aus einem klaren, durchsichtigen Material bestehende Verschlussmittel gewährleistet die gewünschte freie Durchsicht durch das Sichtfenster und sorgt gleichzeitig für eine zuverlässige Abdichtung des Sichtfensters zur Vermeidung des Eindringens insbesondere flüssiger Medien, wie sie beispielsweise bei Reinigungsprozessen anfallen, in den unter dem Verschlussdeckel befindlichen Aufnahmeraum.

Die Ventileinheit verfügt in einem dem Sichtfenster gegenüberliegenden Bereich innerhalb des Aufnahmeraumes über permanent angeordnete Informationsmittel, die durch das Sichtfenster hindurch von außerhalb des Aufnahmeraumes her erkennbar sind. Diese Informationsmittel sind alphanumerischer Art und repräsentieren insbesondere eine Typenbezeichnung und/oder eine Bestellnummer der Ventileinheit. In all diesen Fällen kann ohne ein vorheriges Entfernen des Verschlussdeckels und während des normalen Betriebes der Ventilanordnung eine Identifikation der installierten Ventileinheit stattfinden, um beispielsweise Maßnahmen hinsichtlich einer bevorstehenden Wartungs- oder Reparaturtätigkeit ausführen zu können.

Wenn an der Ventileinheit Informationsmittel der genannten Art angebracht sind, die durch ein in dem Verschlussdeckel ausgebildetes, dicht verschlossenes Sichtfenster hindurch sichtbar sind, kann auf die Anbringung entsprechender Informationen außen an dem Verschlussdeckel verzichtet werden. Auf diese Weise ist der Verschlussdeckel universell verwendbar und nicht an die Verwendung in Verbindung mit einem bestimmten Typ von Ventileinheit gebunden. Auch kann es bei der Montage des Verschlussdeckels nicht zu Verwechslungen kommen, die die Funktionsfähigkeit der Ventilanordnung beeinträchtigen würden.

Vorteilhafte Weiterbildungen der Erfindung gehen aus den Unteransprüchen hervor.

Als besonders zweckmäßig hat es sich erwiesen, das Sichtfenster mit einer rechteckigen Kontur auszubilden.

Eine besonders innige Verbindung zwischen dem Verschlussmittel und dem Deckelkörper ergibt sich, wenn das Verschlussmittel zumindest partiell im Innern des zugeordneten Sichtfensters angeordnet ist. Vor dem gleichen Hintergrund ist es vorteilhaft, wenn das durchsichtige Verschlussmittel zumindest partiell an der dem Aufnahmeraum entgegengesetzten Außenfläche der Begrenzungswand des Deckelkörpers angeordnet ist und dort einen größeren Umriss als das Sichtfenster hat, so dass es an dieser Außenfläche zumindest auch den das Sichtfenster ringsum begrenzenden Randbereich der Begrenzungswand des Deckelkörpers bedeckt, so dass das Sichtfenster, in Draufsicht betrachtet, ringsum von dem durchsichtigen Verschlussmittel überragt wird. Dies hat den Vorteil einer guten Abschirmung des Sichtfensters zur Umgebung hin, was die Qualität der Abdichtung weiter verbessert. In diesem Zusammenhang ist es vorteilhaft, wenn das durchsichtige Verschlussmittel so ausgebildet ist, dass es teils außerhalb des Deckelkörpers im Bereich dessen Außenfläche angeordnet ist und teils auch in das Sichtfenster hineinragt.

Eine mögliche Ausgestaltung sieht vor, dass das durchsichtige Verschlussmittel nur punktuell im Bereich des zugeordneten Sichtfensters angeordnet ist. Es kann dabei konvex gewölbt sein, um die Verschmutzungsanfälligkeit zu verringern und/oder um einen Lupeneffekt zu erzielen.

Bei einer vorteilhaften Ausgestaltung setzt sich der Verschlussdeckel aus mehreren aneinander fixierten Komponenten zusammen, wobei er außer dem Deckelkörper auch noch einen diesen Deckelkörper außen zumindest im Bereich der Begrenzungswand umhüllenden Hüllkörper aufweist, der insgesamt aus einem durchsichtigen, glasklaren Material besteht. Dieser Hüllkörper bildet dann nicht nur das mindestens eine Verschlussmittel, sondern bedeckt auch noch die anderen Bereiche der Begrenzungswand. Vorzugsweise ist der Hüllkörper so ausgebildet, dass er die gesamte Außenfläche des Deckelkörpers bedeckt.

Bei dem Hüllkörper handelt es sich vorzugsweise um einen durch Spritzgießen stoffschlüssig an die Außenfläche des Deckelkörpers angeformten und dadurch mit dem Deckelkörper zu einer Baueinheit in Gestalt des Verschlussdeckels verbundenen Kunststoffkörper. Auch der Deckelkörper ist zweckmäßigerweise eine Kunststoffkomponente, wobei das hier verwendete Kunststoffmaterial allerdings lichtundurchlässig ausgebildet ist.

Der aus einem durchsichtigen Material bestehende Hüllkörper übernimmt zum einen die Funktion als durchsichtiges Verschlussmittel bezüglich eines jeweiligen Sichtfensters. Zweckmäßigerweise ist der Hüllkörper hierbei aus einem durchsichtigen, bevorzugt farblosen Kunststoffmaterial hergestellt. Der Hüllkörper hat zumindest in seinem ein Verschlussmittel bildenden Bereich bevorzugt keinerlei Oberflächenstruktur, sondern ist dort glattflächig ausgebildet.

Darüber hinaus verhindert der Hüllkörper aufgrund seiner großen Ausdehnung auch unter ungünstigen Bedingungen ein Eindringen von Feuchtigkeit im Bereich des Sichtfensters ins Innere des Aufnahmeraumes hinein. Nicht zuletzt besteht auch die vorteilhafte Möglichkeit, den Hüllkörper aus einem bezüglich Reinigungsmitteln hochbeständigen Material herzustellen, was die Lebensdauer begünstigt, wenn die Ventilanordnung in Bereichen eingesetzt wird, in denen häufige Reinigungsvorgänge mit aggressiven Medien durchgeführt werden müssen.

Der Verschlussdeckel ist vorzugsweise haubenförmig gestaltet, wobei er über eine Deckenwand und eine seitlich umlaufende Umfangswand verfügt. Dieser haubenförmige Verschlussdeckel übergreift die im Aufnahmeraum angeordnete Ventileinheit von oben her. Der Aufnahmeraum kann sich in diesem Zusammenhang ausschließlich im Innern des haubenförmigen Verschlussdeckels oder auch teils im Innern des Verschlussdeckels und teils im Innern des Grundkörpers erstrecken. Das mindestens eine Sichtfenster kann prinzipiell an jeder dafür geeigneten Stelle des Verschlussdeckels angeordnet sein, wobei sich eine Platzierung in der Deckenwand als besonders vorteilhaft empfiehlt, weil dadurch eine bequeme Einsichtnahme von oben her möglich ist.

Ein haubenförmig gestalteter Verschlussdeckel hat zweckmäßigerweise einen mehrschichtigen Aufbau, wobei eine innere Schicht aus dem Deckelkörper und eine äußere Schicht aus dem Hüllkörper besteht, wobei sowohl der Deckelkörper als auch der Hüllkörper haubenförmig gestaltet sind. Der Hüllkörper kann relativ dünn sein.

Als Material für den durchsichtigen Hüllkörper empfiehlt sich vor allem ein Polypropylen-Kunststoffmaterial. Der Deckelkörper ist zweckmäßigerweise aus einem Polyamid-Kunststoffmaterial gefertigt.

Als besonders vorteilhaft wird eine Ausgestaltung angesehen, bei der sich der Aufnahmeraum aus einem im Grundkörper ausgebildeten Grundkörper-Innenraum und einem im Verschlussdeckel ausgebildeten Verschlussdeckel-Innenraum zusammensetzt, wobei die Ventileinheit mit einem unteren Teilabschnitt in dem Grundkörper-Innenraum aufgenommen ist und mit einem über den Grundkörper hinausragenden oberen Teilabschnitt in den Verschlussdeckel-Innenraum hineinragt. Eine solche Bauform hat den Vorteil, dass trotz geringer Höhenabmessungen der Ventilanordnung ein bequemes Ergreifen des aus dem Grundkörper herausragenden oberen Teilabschnitts der Ventileinheit möglich ist, um sie bequem montieren oder demontieren zu können.

Bevorzugt sind die Höhenabmessungen des Verschlussdeckel-Innenraumes und des Grundkörper-Innenraumes derart aufeinander abgestimmt, dass die Ventileinheit mit mindestens 20 %, maximal jedoch 80 % ihrer Bauhöhe in dem Grundkörper-Innenraum aufgenommen ist. Nur der verbleibende Höhenanteil der Ventileinheit ragt dann aus dem Grundkörper heraus und in den bevorzugt haubenförmig gestalteten Verschlussdeckel hinein.

Vorteilhaft ist es, wenn die Ventileinheit unabhängig vom zugeordneten Verschlussdeckel am Grundkörper befestigt ist. Auf diese Weise kann gewährleistet werden, dass die Ventileinheit, insbesondere bei Wartungsarbeiten, auch bei abgenommenem Verschlussdeckel voll funktionsfähig ist. Ob der Verschlussdeckel angebracht ist oder nicht, wirkt sich auf die Betriebsfähigkeit der am Grundkörper befestigten Ventileinheit als solches zweckmäßigerweise nicht aus.

Die Ventileinheit ist zweckmäßigerweise von elektro-fluidisch vorgesteuerter Bauart. Sie verfügt hierbei über eine unmittelbar zur Steuerung eines Druckfluides, insbesondere Druckluft, dienende Hauptventileinrichtung, die mittels einer Antriebseinrichtung betätigbar ist, die in Form einer ebenfalls zur Ventileinheit gehörenden, elektrisch betätigbaren Vorsteuerventileinrichtung realisiert ist. Die Vorsteuerventileinrichtung enthält ein oder mehrere Vorsteuerventile, die jeweils zweckmäßigerweise in Form eines Magnetventils realisiert sind, das einen Elektromagnet als Antriebskomponente aufweist.

Bevorzugt ist im Innern des Ventilträgers zusätzlich zu dem Aufnahmeraum ein Signalübertragungsraum ausgebildet, der sich vollständig im Grundkörper befindet und in dem elektrische Signalübertragungsmittel angeordnet sind, die die Übertragung elektrischer Signale zu und eventuell auch von der elektrisch betätigbaren Antriebseinrichtung der Ventileinheit übernehmen. Mittels der Antriebseinrichtung zugeführten elektrischen Signalen wird der Betrieb der Ventileinheit gesteuert. Von der Ventileinheit empfangene elektrische Signale können Status-Rückmeldesignale der Ventileinheit sein. Die Signalübertragungsmittel sind insbesondere auf der Basis von mit elektrischen Leitflächen versehenen Platinen realisiert.

Eine mögliche Ausführungsform der Ventilanordnung enthält in dem Ventilträger einen einzigen Aufnahmeraum, der mit einer Ventileinheit bestückt ist. Eine weitere Ausführungsform der Ventilanordnung verfügt über mehrere Aufnahmeräume, die jeweils zumindest teilweise in einem einstückigen Grundkörper des Ventilträgers ausgebildet sind.

Als besonders vorteilhaft wird eine Ausgestaltung der Ventilanordnung angesehen, bei der der Ventilträger über einen modularen Aufbau verfügt und sich aus mehreren in einer Aufreihungsrichtung aneinandergereihten Ventilträgermodulen zusammensetzt, die jeweils einen eigenen Grundkörper und Verschlussdeckel aufweisen, um pro Ventilträgermodul einen Aufnahmeraum für eine Ventileinheit zu definieren. Die Ventilträgermodule sind mit ihren Grundkörpern in einer Aufreihungsrichtung aneinander angesetzt und aneinander befestigt.

Bei dem geschilderten modularen Aufbau ist es von Vorteil, wenn der Verschlussdeckel in Draufsicht gesehen einen kleineren Umriss als die Montagefläche des zugeordneten Grundkörpers hat. Auf diese Weise ergibt sich zwischen den Verschlussdeckeln benachbarter Ventilträgermodule ein Zwischenraum, der das Ergreifen des Verschlussdeckels zum Zwecke seines Ansetzens oder Abhebens erleichtert.

Zweckmäßigerweise sind alle Ventilträgermodule von mehreren Ventilträger-Durchgangsfluidkanälen durchsetzt, durch die hindurch eine sowohl gemeinsame Fluidversorgung als auch gemeinsame Fluidentsorgung sämtlicher Ventileinheiten der Ventilanordnung stattfinden kann. Jeder Ventilträger-Durchgangsfluidkanal setzt sich aus aneinandergereihten Ventilträger-Fluidkanälen der aneinander angesetzten Ventilträgermodule zusammen.

Bei einem modularen Aufbau der Ventilanordnung sind zweckmäßigerweise sämtliche Ventilträgermodule von einem Signalübertragungskanal durchsetzt, der sich aus aneinandergereihten Signalübertragungsräumen der einzelnen Ventilträgermodule zusammensetzt. In diesem Signalübertragungskanal erstreckt sich ein für eine elektrische Signalübertragung ausgelegter Signalübertragungsstrang, der mit der elektrisch betätigbaren Antriebseinrichtung der Ventileinheit jedes Ventilträgermoduls elektrisch kontaktiert ist, um von außen her, unter Verwendung einer geeigneten elektronischen Steuereinrichtung, die elektrische Ansteuerung der diversen Ventileinheiten durchzuführen.

Nachfolgend wird die Erfindung anhand der beiliegenden Zeichnung näher erläutert. In dieser zeigen:

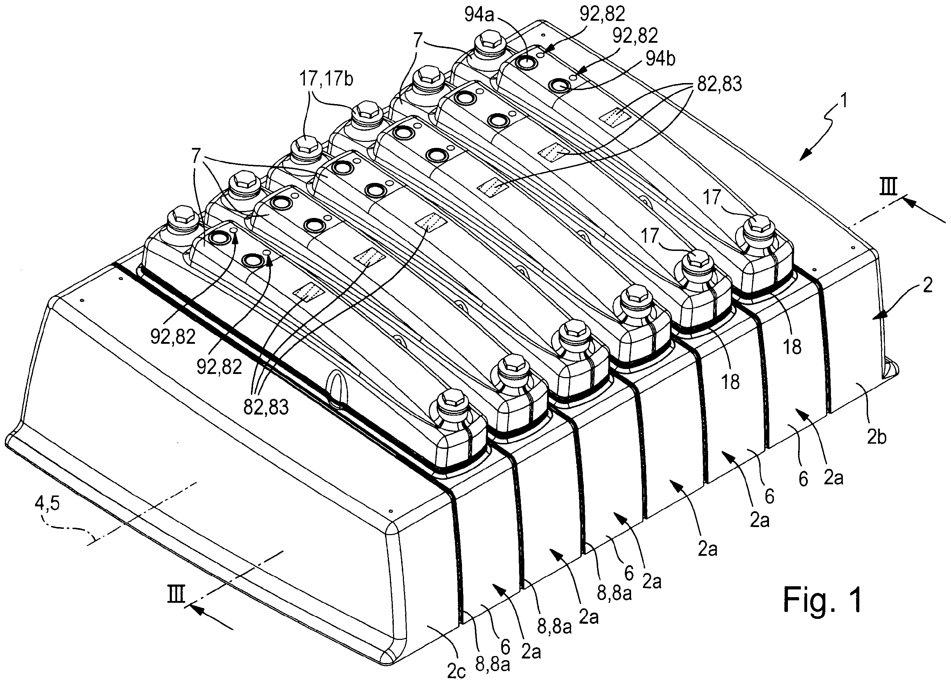

- Figur 1: eine Schrägansicht einer bevorzugten Ausführungsform der erfindungsgemäßen Ventilanordnung,

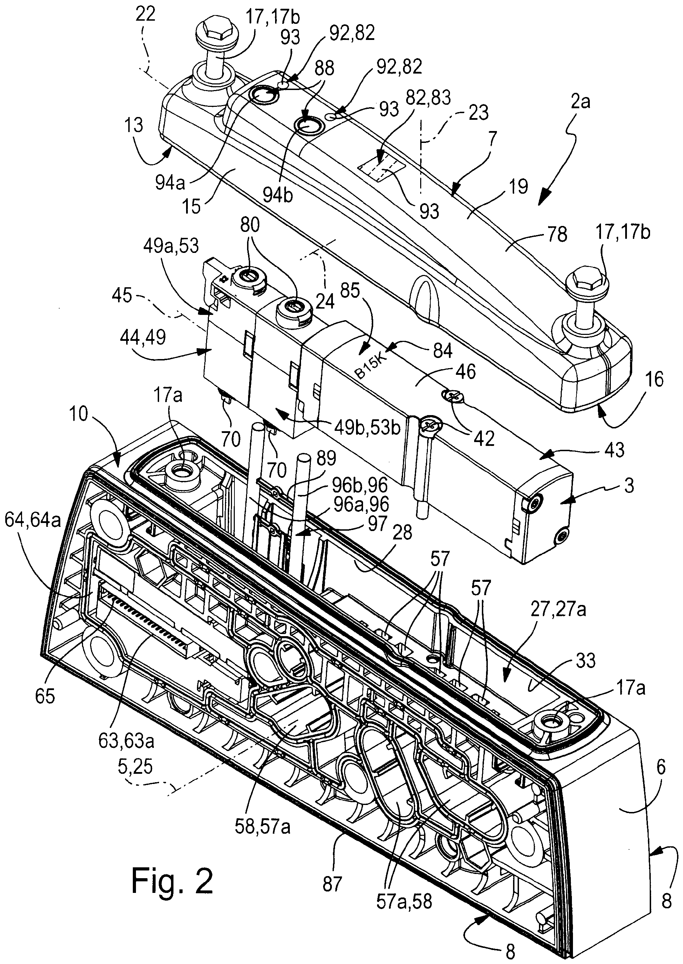

- Figur 2: eines der Ventilträgermodule der exemplarisch modular aufgebauten Ventilanordnung in einer Einzeldarstellung im entfernten Zustand sowohl seines Verschlussdeckels als auch der in dem dadurch zugänglichen Aufnahmeraum zu montierenden Ventileinheit,
- Figur 3: einen Längsschnitt der Ventilanordnung aus Figur 1 gemäß der dortigen Schnittlinie III-III,

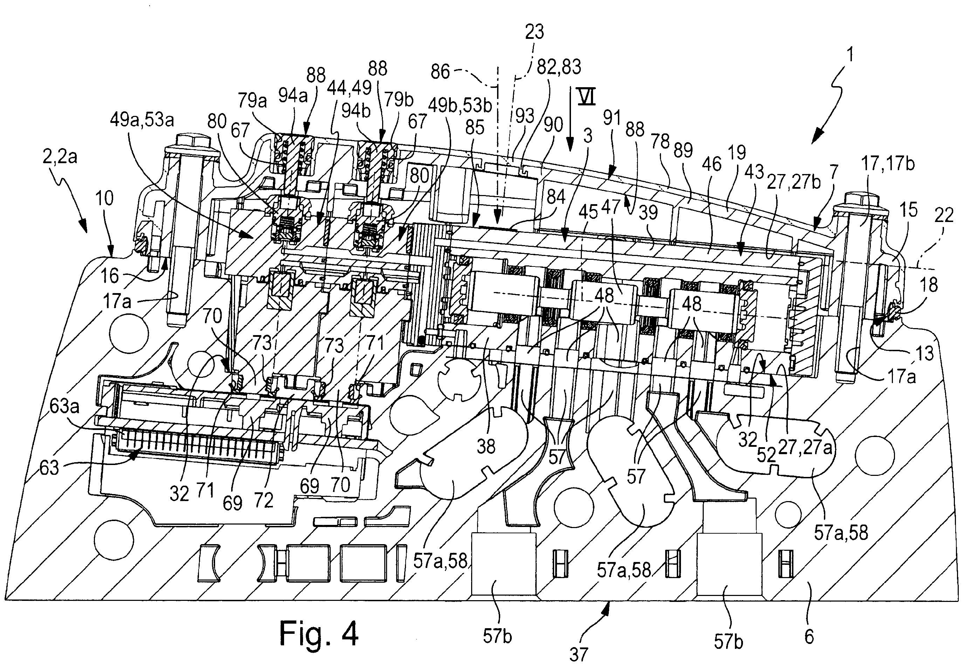

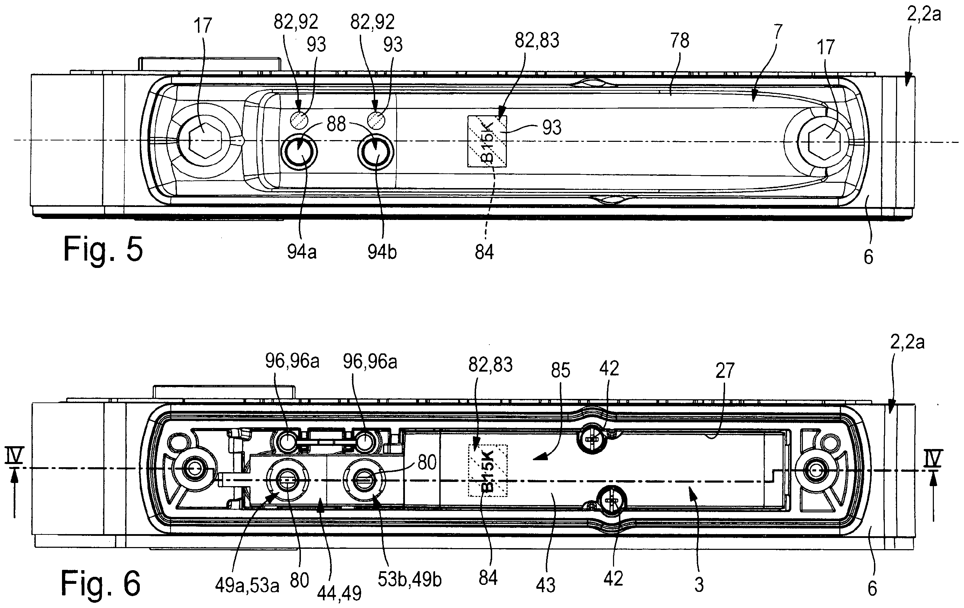

- Figur 4: einen Querschnitt durch die Ventilanordnung im Bereich eines Ventilträgermoduls gemäß Schnittlinie IV-IV aus Figuren 3 und 6,
- Figur 5: eine Draufsicht auf eines der Ventilträgermodule mit Blickrichtung gemäß Pfeil V aus Figur 4, und
- Figur 6: eine Draufsicht auf ein Ventilträgermodul mit Blickrichtung gemäß Pfeil V aus Figur 4 im abgenommenen Zustand des Verschlussdeckels.

Die in der Zeichnung illustrierte Ventilanordnung 1 verfügt über einen bevorzugt eine Längsgestalt aufweisenden Ventilträger 2, der mit einer Mehrzahl von elektrisch betätigbaren Ventileinheiten 3 bestückt ist. Die Ventileinheiten 3 sind bevorzugt vom elektro-fluidisch und insbesondere elektro-pneumatisch vorgesteuerten Typ. Bei den Ventileinheiten 3 handelt es sich insbesondere um Mehrwegeventile, beispielsweise um 5/2-Wegeventile.

Der Ventilträger 2 erstreckt sich in der Richtung einer strichpunktiert angedeuteten Hauptachse 4, die beim Ausführungsbeispiel die Längsachse des Ventilträgers 2 definiert.

Der Ventilträger 2 ist bevorzugt modular aufgebaut und enthält in diesem Fall eine Mehrzahl von Ventilträgermodulen 2a, die in einer Aufreihungsrichtung 5, welche zweckmäßigerweise mit der Achsrichtung der Hauptachse 4 zusammenfällt, aneinandergereiht und aneinander befestigt sind. Vorzugsweise enthält der Ventilträger 2 auch noch zwei die Reihe von Ventilträgermodulen 2a stirnseitig an beiden Seiten begrenzende Abschlussmodule 2b, 2c, die insbesondere als Abschlussdeckel ausgebildet sind. Alle Module 2a, 2b, 2c des Ventilträgers 2 sind dadurch aneinander fixiert, dass sie entweder mittels eines oder mehrerer Zuganker zusammengespannt sind oder jeweils unmittelbar benachbarte Ventilträgermodule 2a, 2b, 2c direkt aneinander befestigt sind. Jedes Ventilträgermodul 2a ist mit einer der Ventileinheiten 3 ausgestattet.

Jedes Ventilträgermodul 2a hat einen mehrteiligen Aufbau und enthält einen Grundkörper 6 sowie einen insbesondere lösbar daran befestigten Verschlussdeckel 7. Gemeinsam begrenzen der Grundkörper 6 und der Verschlussdeckel 7 einen Aufnahmeraum 27 für eine zur Umgebung hin gekapselte Unterbringung einer Ventileinheit 3.

Die einzelnen Grundkörper 6 sind zweckmäßigerweise einstückig ausgebildet und bestehen insbesondere aus Kunststoffmaterial. Sie sind bevorzugt plattenförmig oder scheibenförmig gestaltet. Jeder Grundkörper 6 hat zwei einander entgegengesetzt in der Aufreihungsrichtung 5 orientierte Seitenflächen, die im Folgenden als Fügeflächen 8 bezeichnet werden, weil die Ventilträgermodule 2a mit diesen Fügeflächen 8 voraus aneinandergesetzt sind. Auf diese Weise sind zu benachbarten Ventilträgermodulen 2a gehörende Fügeflächen 8 einander paarweise in der Aufreihungsrichtung 5 zugewandt.

Die endseitigen Abschlussmodule 2b, 2c sind mit jeweils einer Anbaufläche 8a an jeweils eine zugewandte Fügefläche 8 des Grundkörpers 6 eines reihenletzten Ventilträgermoduls 2a der Ventilträgermodulreihe angesetzt.

Jeder Grundkörper 6 hat beim Ausführungsbeispiel an einer rechtwinkelig zu der Aufreihungsrichtung 5 orientierten Außenseite, die exemplarisch eine Oberseite ist, eine Montagefläche 10, an der ein Verschlussdeckel 7 lösbar montiert ist.

Der Verschlussdeckel 7 ist bevorzugt haubenförmig ausgebildet und mit einer im Folgenden als Deckelöffnung 13 bezeichneten Haubenöffnung voraus an die Montagefläche 10 angesetzt. Der Verschlussdeckel 7 hat oben eine der Deckelöffnung 13 gegenüberliegende Deckenwand 19 und eine sich einstückig daran anschließende, zum zugeordneten Grundkörper 6 nach unten ragende seitliche Umfangswand 15, wobei die Umfangswand 15 an der der Deckenwand 19 abgewandten Seite eine Stirnfläche 16 aufweist, die die Deckelöffnung 13 umrahmt.

Jeder Verschlussdeckel 7 ist unabhängig von den anderen Verschlussdeckeln 7 am Grundkörper des zugeordneten Ventilträgermoduls 2a befestigt. Hierzu sind erste Befestigungsmittel 17 vorhanden, die exemplarisch von Befestigungsschrauben 17b gebildet sind, welche die Wand des Verschlussdeckels 7 durchsetzen und jeweils in ein im Grundkörper 6 ausgebildetes Befestigungsgewinde 17a eingeschraubt sind.

Zwischen der Stirnfläche 16 des Verschlussdeckels 7 und der Montagefläche 10 befindet sich ein Dichtungsmittel 18, durch das eine Abdichtung zwischen dem Verschlussdeckel 7 und dem Grundkörper 6 bewirkt wird.

Zweckmäßigerweise haben die Verschlussdeckel 7 eine längliche Gestalt mit einer zu der Aufreihungsrichtung 5 rechtwinkelig verlaufenden Längsachse 22. Daraus resultiert exemplarisch eine bevorzugte längliche Haubengestalt des Verschlussdeckels 7.

Jeder Verschlussdeckel 7 hat darüber hinaus eine senkrecht zu der Montagefläche 10 ausgerichtete Hochachse 23 und eine parallel zu der Aufreihungsrichtung 5 verlaufende Querachse 24. Die Abmessungen des Verschlussdeckels 7 in der Querrichtung sind wesentlich kleiner als in der Längsrichtung.

Jeder Grundkörper 6 hat eine in der Aufreihungsrichtung 5 orientierte Querachse 25. Bevorzugt sind die in Achsrichtung dieser Querachse 25 gemessenen Querabmessungen des Grundkörpers 6 zumindest im Bereich der Montagefläche 10 größer als die Querabmessungen des zugeordneten Verschlussdeckels 7. Auf diese Weise ergibt sich zwischen in der Aufreihungsrichtung 5 unmittelbar benachbarten Verschlussdeckeln 7 ein Zwischenraum 26, der das individuelle Ergreifen der Verschlussdeckel 7 zum Zwecke ihrer Montage oder Demontage erleichtert.

Pro Ventilträgermodul 2a definieren der Grundkörper 6 und der daran bevorzugt lösbar befestigte Verschlussdeckel 7 gemeinsam einen nach außen zur Umgebung hin abgeschlossenen Aufnahmeraum 27. Dieser Aufnahmeraum 27 erstreckt sich beim Ausführungsbeispiel teils im Innern des Grundkörpers 6 und teils im Innern des haubenförmigen Verschlussdeckels 7. Der im Grundkörper 6 ausgebildete Teilabschnitt des Aufnahmeraums 27 sei im Folgenden als Grundkörper-Innenraum 27a bezeichnet, der im Verschlussdeckel 7 ausgebildete Teilabschnitt des Aufnahmeraums 27 als Verschlussdeckel-Innenraum 27b.

Bei einem nicht abgebildeten Ausführungsbeispiel ist der gesamte Aufnahmeraum 27 im Innern des Grundkörpers 7 ausgebildet, besteht also ausschließlich aus einem Grundkörper-Innenraum 27a entsprechender Höhe. Der Verschlussdeckel 7 kann in diesem Fall beispielsweise plattenförmig ausgebildet sein.

Bei einem ebenfalls nicht gezeigten Ausführungsbeispiel ist der gesamte Aufnahmeraum 27 im Innern des Verschlussdeckels 7 ausgebildet, besteht also ausschließlich aus einem Verschlussdeckel-Innenraum 27b.

Der Grundkörper-Innenraum 27a ist zweckmäßigerweise taschenartig ausgebildet. Er weist eine auf Höhe der Montagefläche 10 liegende, dem Verschlussdeckel 7 zugewandte und im Folgenden als Montageöffnung 28 bezeichnete Öffnung auf und ist sowohl an der der Montageöffnung 28 gegenüberliegenden Unterseite als auch ringsum seitlich von dem Grundkörper 6 begrenzt. Dementsprechend bildet der Grundkörper 6 eine den Grundkörper-Innenraum 27a unten begrenzende Bodenfläche 32 und eine sich seitlich rings um den Grundkörper-Innenraum 27a herum erstreckende seitliche Umfangsfläche 33. Die seitliche Umfangsfläche 33 erstreckt sich nach oben bis zu der Montageöffnung 28.

Unabhängig von der Ausgestaltung des Ventilträgers 2 ist der Aufnahmeraum 27 abgesehen von im Folgenden noch erläuterten Öffnungen - die Mündungen von Kontaktierungslöchern 71, von Lichtleiter-Durchgriffsöffnungen 30 und von Ventilträger-Fluidkanälen 57 - ringsum vollständig geschlossen. Der Aufnahmeraum 27 ist insbesondere auch zu den beiden Fügeflächen 8 hin durch eine die Umfangsfläche 33 bildende Wandung verschlossen, so dass er selbst im Individualzustand eines Ventilträgermoduls 2a von den Fügeflächen 8 her nicht zugänglich ist.

Im Aufnahmeraum 27 jedes Ventilträgermoduls 2a ist eine der schon erwähnten, elektrisch betätigbaren Ventileinheiten 3 zur unmittelbaren Umgebung der Ventilanordnung 1 hin gekapselt untergebracht. Da der Aufnahmeraum 27 nach außen hin abgeschlossen ist, ist die darin befindliche Ventileinheit 3 keinen Umgebungseinflüssen unmittelbar ausgesetzt. Insbesondere kann die Ventileinheit 3 nicht verschmutzen und kann auch nicht durch aggressive Reinigungsmedien in Mitleidenschaft gezogen werden, die eventuell von Zeit zu Zeit genutzt werden, um die Ventilanordnung 1 außen zu reinigen.

Bevorzugt ist jede Ventileinheit 3 derart im zugeordneten Aufnahmeraum 27 angeordnet, dass sie mit einem im Folgenden als unterer Teilabschnitt 38 bezeichneten unteren Teilbereich im Grundkörper-Innenraum 27a sitzt und mit einem im Folgenden als oberer Teilabschnitt 39 bezeichneten oberen Teilbereich in den vom Verschlussdeckel 7 gebildeten Verschlussdeckel-Innenraum 27b hineinragt. Die Ventileinheit 3 befindet sich also teilweise im Grundkörper-Innenraum 27a und teilweise im Verschlussdeckel-Innenraum 27b.

Bevorzugt ist die Ventileinheit 3 unabhängig vom Verschlussdeckel 7 am Grundkörper 6 befestigt. Auf diese Weise kann der Verschlussdeckel 7 abgenommen und wieder montiert werden, ohne die montierte Ventileinheit lösen zu müssen. Zu Testzwecken oder bei Wartungsarbeiten kann somit die Ventilanordnung 1 auch in einem Zustand regulär betrieben werden, in dem eine oder mehrere Ventileinheiten 3 momentan nicht von einem Verschlussdeckel 7 umgeben sind.

Zur Befestigung am Grundkörper 6 sind jeder Ventileinheit 3 zweite Befestigungsmittel 42 zugeordnet, die gesondert und unabhängig von den zur Fixierung des zugeordneten Verschlussdeckels 7 genutzten ersten Befestigungsmitteln 17 ausgebildet sind. Exemplarisch sind sie von Befestigungsschrauben gebildet, die die Ventileinheit 3 durchsetzen und in den Grundkörper 6 eingeschraubt sind.

Zur Montage und Demontage kann die Ventileinheit 3 bequem an dem über den Grundkörper 6 vorstehenden oberen Teilabschnitt 39 ergriffen werden.

Jede Ventileinheit 3 ist zu ihrer gesteuerten Betätigung mit einer elektrisch betätigbaren Antriebseinrichtung 49 ausgestattet. Die Ventileinheit 3 kann prinzipiell vom elektrisch direkt betätigbaren Typ sein, wobei dann die Antriebseinrichtung 49 bevorzugt über eine elektromechanische Funktionsweise verfügt und beispielsweise mindestens einen elektromagnetischen Antrieb aufweist, der die Ventileinheit 3 auf der Grundlage elektrischer Steuersignale direkt mechanisch umschaltet.

Bevorzugt ist Ventileinheit 3 allerdings von elektro-fluidisch und insbesondere elektro-pneumatisch vorgesteuerter Bauart. Dies trifft auf das Ausführungsbeispiel zu. Hier setzt sich die Ventileinheit 3 aus einer Hauptventileinrichtung 43 und einer mit der Hauptventileinrichtung 43 zu einer Baueinheit zusammengefassten Vorsteuerventileinrichtung 44 zusammen, wobei die Vorsteuerventileinrichtung 44 die elektrische Antriebseinrichtung 49 bildet. Die Ventileinheit 3 hat eine Längsachse 45, wobei die Vorsteuerventileinrichtung 44 bevorzugt an nur einer der beiden Stirnseiten der Hauptventileinrichtung 43 angeordnet ist.

Die Hauptventileinrichtung 43 hat ein Hauptventilgehäuse 46 und mindestens ein beweglich darin angeordnetes, insbesondere schieberartig ausgebildetes Hauptventilglied 47. Letzteres ist durch Fluidkraft in zwei unterschiedlichen Schaltstellungen positionierbar, in denen es im Hauptventilgehäuse 46 verlaufende Hauptventilkanäle 48 in bestimmten Mustern miteinander fluidisch verbindet oder voneinander abtrennt. Jede Schaltstellung des Hauptventilgliedes 47 definiert einen Betriebszustand der Ventileinheit 3. Die Hauptventilkanäle 48 münden außen derart an einer Grundfläche 52 der Ventileinheit 3 aus, dass sie mit den in den Aufnahmeraum 27 einmündenden, ebenfalls zur Leitung eines Fluides geeigneten Ventilträger-Fluidkanälen 57 in Fluidverbindung stehen.

Die Fluidkraft für die Betätigung des Hauptventilgliedes 47 liefert ein insbesondere von Druckluft gebildetes Druckfluid, das der Hauptventileinrichtung 43 durch die Vorsteuerventileinrichtung 44 gesteuert zugeführt wird. Die Vorsteuerventileinrichtung 44 ist elektrisch betätigbar ausgebildet.

Die exemplarisch als Vorsteuerventileinrichtung 44 konzipierte, elektrisch betätigbare Antriebseinrichtung 49, enthält zur Betätigung der Ventileinheit 3 mindestens eine elektrisch betätigbare Antriebseinheit 49a, 49b. Exemplarisch sind zwei solcher Antriebseinheiten 49a, 49b vorhanden, die jeweils für das aktive Umschalten in eine Schaltstellung bzw. einen Betriebszustand der Ventileinheit 3 verantwortlich sind. Jede Antriebseinheit 49a, 49b ist bevorzugt als Vorsteuerventil ausgebildet und dabei insbesondere als Magnetventil. Exemplarisch sind daher zwei solcher Vorsteuerventile 53a, 53b vorhanden.

Die Ventileinheit 3 ist mit ihrer Grundfläche 52 voraus in den Grundkörper-Innenraum 27a eingesetzt und liegt mit der Grundfläche 52 an der Bodenfläche 32 an. Dabei kommunizieren die an der Grundfläche 52 ausmündenden Hauptventilkanäle 48 jeweils mit einem der in dem Grundkörper 6 ausgebildeten und an der Bodenfläche 32 in den Aufnahmeraum 27 einmündenden Ventilträger-Fluidkanälen 57.

Zu dem im Grundkörper-Innenraum 27a aufgenommenen unteren Teilabschnitt 38 der Ventileinheit 3 gehört zweckmäßigerweise zumindest ein Abschnitt der Hauptventileinrichtung 43. Exemplarisch befinden sich sowohl die Vorsteuerventileinrichtung 44 als auch die Hauptventileinrichtung 43 jeweils teilweise in dem Grundkörper-Innenraum 27a und teilweise in dem Verschlussdeckel-Innenraum 27b.

Vorzugsweise sind die Höhenabmessungen der Ventileinheit 3 und des Aufnahmeraumes 27 so aufeinander abgestimmt, dass die Ventileinheit 3 mit mindestens 20 % und maximal 80 % ihrer Bauhöhe in dem Grundkörper-Innenraum 27 aufgenommen ist. Zweckmäßigerweise gelten diese Prozentangaben sowohl für die Hauptventileinrichtung 43 als auch für die Vorsteuerventileinrichtung 44.

Die Ventileinheit 3 erhält die ihre standardmäßige Betätigung steuernden elektrischen Steuersignale von einem Signalübertragungsstrang 63, der sich in einem den Ventilträger 2 in der Aufreihungsrichtung 5 durchsetzenden Signalübertragungskanal 64 erstreckt. An seinen beiden Stirnseiten ist der Signalübertragungskanal 64 zweckmäßigerweise von den beiden Abschlussmodulen 2b, 2c verschlossen. Außen am Ventilträger 2 und insbesondere an einem der Abschlussmodule 2c angeordnete elektromechanische Schnittstellenmittel 68 stehen mit dem Signalübertragungsstrang 63 in elektrischer Verbindung und ermöglichen die signalübertragende Kommunikation mit einer nicht abgebildeten externen elektronischen Steuereinrichtung.

Jedes Ventilträgermodul 2a ist, insbesondere im Bereich des Grundkörpers 6, von einem individuellen Signalübertragungsraum 64a in seiner Querrichtung durchsetzt. Mithin mündet jeder Signalübertragungsraum 64a zu den beiden Fügeflächen 8 des zugeordneten Ventilträgermoduls 2a aus. Die Signalübertragungsräume 64a sämtlicher Ventilträgermodule 2a fluchten miteinander und ergänzen sich zu dem Signalübertragungskanal 64.

Der Signalübertragungsstrang 63 verfügt innerhalb jedes Signalübertragungsraumes 64a über mindestens einen ersten elektrischen Kommunikationsabschnitt 69. Mit jedem ersten elektrischen Kommunikationsabschnitt 69 steht ein zweiter elektrischer Kommunikationsabschnitt 70 der Antriebseinrichtung 49 der Ventileinheit 3 lösbar in elektrisch leitender Verbindung. Dadurch ist elektromechanisch eine elektrische Verbindung zwischen dem Signalübertragungsstrang 63 und jeder elektrisch betätigbaren Ventileinheit 3 hergestellt. Beim Ausführungsbeispiel ist der zweite elektrische Kommunikationsabschnitt 70 als Stecker und der erste elektrische Kommunikationsabschnitt 69 als Steckergegenstück ausgebildet.

Jede dieser elektrischen Verbindungen erfolgt durch ein Kontaktierungsloch 71 hindurch, das im Ventilträgermodul 2a ausgebildet ist und sich zwischen dem Aufnahmeraum 27 und dem Signalübertragungsraum 64a erstreckt. Exemplarisch überlagern sich der Aufnahmeraum 27 und der Signalübertragungsraum 64a räumlich, wobei eine die Bodenfläche 32 bildende Trennwand 72 des Grundkörpers 6 sich zwischen dem Aufnahmeraum 27 und dem Signalübertragungsraum 64a erstreckt und von dem mindestens einen Kontaktierungsloch 71 durchsetzt ist.

Beim Ausführungsbeispiel sind pro Ventilträgermodul 2a zwei Kontaktierungslöcher 71 vorhanden, um eine elektrische Verbindung zwischen dem Signalübertragungsstrang 63 und jeder der beiden Antriebseinheiten 49a, 49b der Ventileinheit 3 herzustellen. Vorzugsweise sind die Kontaktierungslöcher 71 jeweils durch ein Dichtungsmittel 73 fluiddicht verschlossen.

Der Signalübertragungsstrang 63 ist zweckmäßigerweise modular aufgebaut und setzt sich aus einer Mehrzahl von jeweils im Innern eines Signalübertragungsraumes 64a angeordneten Signalübertragungssegmenten 63a zusammen, die unter elektrischer Verbindung aneinandergereiht sind. Zweckmäßigerweise ist jedes Signalübertragungssegment 63a am zugeordneten Ventilträgermodul 2a befestigt, so dass sich die elektrische Verbindung, die insbesondere mittels einer Steckverbindung durch Steckverbindungsmittel 65 realisiert wird, automatisch beim Aneinanderansetzen der Ventilträgermodule 2a einstellt. Bei einer solchen Ausgestaltung sind die ersten elektrischen Kommunikationsabschnitte 69 jeweils an einem der Signalübertragungssegmente 63a angeordnet.

Die Ventilanordnung 1 ist vorzugsweise so ausgestaltet, dass sowohl eine gemeinsame Fluidversorgung als auch eine gemeinsame Fluidentsorgung sämtlicher Ventileinheiten 3 durch den Ventilträger 2 hindurch möglich ist. Zu diesem Zweck sind einige der in den Ventilträgermodulen 2a ausgebildeten Ventilträger-Fluidkanäle 57 so ausgestaltet, dass sie einen Verbindungskanalabschnitt 57a aufweisen, der das Ventilträgermodul 2a und insbesondere dessen Grundkörper 6 in der Achsrichtung der Hauptachse 4 durchsetzt und zu beiden Fügeflächen 8 des Ventilträgermoduls 2a ausmündet. Von diesen beim Ausführungsbeispiel pro Ventilträgermodul 2a insgesamt drei voneinander unabhängigen Verbindungskanalabschnitten 57a dient mindestens einer zur Fluideinspeisung und mindestens einer zur Fluidabfuhr. Eingespeist wird dasjenige Druckfluid, das durch die Ventileinheiten 3 zu an die Ventileinheiten 3 angeschlossenen Verbrauchern geleitet werden soll. Abgeführt wird dasjenige Fluid, das von den angeschlossenen Verbrauchern zurückströmt.

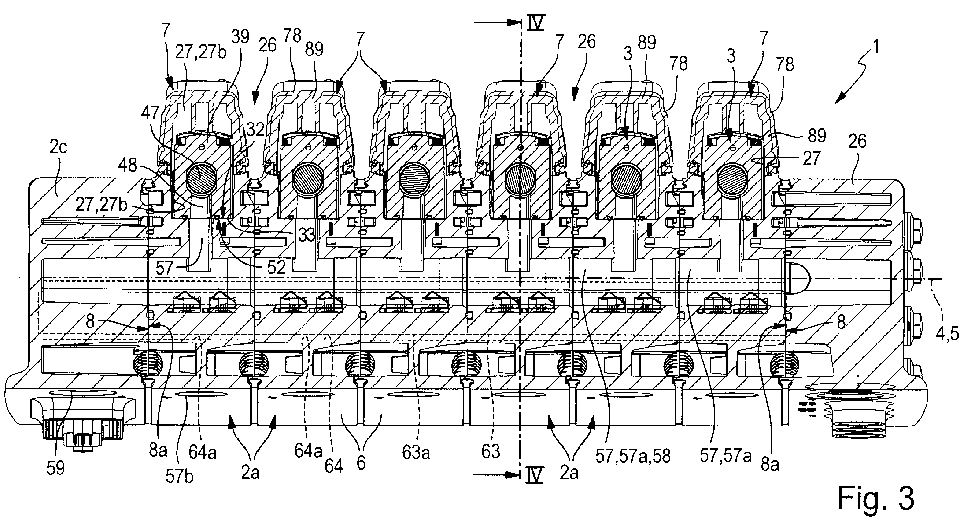

Im zusammengefügten Zustand der Ventilträgermodule 2a kommunizieren die in den einzelnen Ventilträgermodulen 2a ausgebildeten Ventilkanalabschnitte 57a miteinander und definieren einen oder mehrere den Ventilträger 2 in der Aufreihungsrichtung 5 durchziehenden Ventilträger-Durchgangsfluidkanal 58. Exemplarisch ergeben sich dadurch insgesamt drei solcher Ventilträger-Durchgangsfluidkanäle 58, von denen einer zur Fluidversorgung und zwei zur Fluidentsorgung genutzt werden. Jeder dieser Ventilträger-Durchgangsfluidkanäle 58 ist zweckmäßigerweise an mindestens einem der Abschlussmodule 2c zugänglich, um eine Verbindung zu einer Druckquelle oder einer Drucksenke beziehungsweise der Atmosphäre herzustellen. Man erkennt in Figur 3 diesbezüglich drei an der Grundfläche 37 ausmündende Anschlussöffnungen 59 dieser Ventilträger-Durchgangsfluidkanäle 58.

In der Regel ein oder zwei Ventilträgerkanäle 57 pro Ventilträgermodul 2a fungieren als Arbeitskanäle 57b und münden an einer Außenfläche des Ventilträgermoduls 2a aus, insbesondere an der Grundfläche 37. Dort können Fluidleitungen angeschlossen werden, die zu einem zu betätigenden Verbraucher führen.

In dem Fügebereich zwischen jeweils aufeinanderfolgend angeordneten Ventilträgermodulen 2a sind zweckmäßigerweise Dichtungsmittel 87 angeordnet, um insbesondere die Übergangsbereiche zwischen den Verbindungskanalabschnitten 57a gegeneinander abzudichten und auch um ein Eindringen von Verunreinigungen oder Feuchtigkeit in den Fügebereich zu verhindern.

Soll die Ventilanordnung 1 nur eine einzige Ventileinheit 3 aufweisen, kann der betreffende Grundkörper 6 an den beiden Seiten- bzw. Fügeflächen 8 direkt mit Abschlussmodulen 2b, 2c verschlossen werden, von denen mindestens eines die erforderlichen Anschlussmöglichkeiten für die notwendigen fluidischen und elektrischen Verbindungen aufweist. Alternativ kann zur Bildung der Ventilanordnung 1 auch ein Grundkörper 6 verwendet werden, der bereits spezifisch für eine EinzelVentileinheit-Lösung konzipiert ist und nicht zur Aneinanderreihung mehrerer Module ausgelegt ist.

Bei einer nicht gezeigten Ausführungsform ist ein einstückiger Grundkörper 6 mit mehreren unteren Raumabschnitten 27a versehen, denen jeweils ein eigener Verschlussdeckel 7 zugeordnet ist, so dass ein einziger Grundkörper 6 gleichzeitig zur Bildung mehrerer Aufnahmeräume 27 beiträgt.

Der Verschlussdeckel 7 setzt sich aus mehreren Komponenten zusammen. Eine Hauptkomponente, die für die Formgebung und Stabilität des Verschlussdeckels 7 maßgeblich verantwortlich ist, ist ein Deckelkörper 89, der beim Ausführungsbeispiel haubenförmig gestaltet ist. Der Deckelkörper 89 bildet eine Begrenzungswand 90, die den Aufnahmeraum 27 unmittelbar begrenzt und die lichtundurchlässig ausgebildet ist. Bevorzugt besteht der Deckelkörper aus einem Kunststoffmaterial und ist zweckmäßigerweise durch Spritzgießen hergestellt. Die an den Dichtungsmitteln 18 anliegende Stirnfläche 16 ist bevorzugt zumindest teilweise von dem Deckelkörper 89 gebildet.

Der Deckelkörper 89 hat eine dem Aufnahmeraum 27 zugewandte Innenfläche 88 und eine dem Aufnahmeraum 27 abgewandte Außenfläche 91. Die Außenfläche 91 definiert gleichzeitig die Außenfläche der Begrenzungswand 90.

In der Begrenzungswand 90 sind beim Ausführungsbeispiel mehrere lokal verteilte Durchbrechungen ausgebildet, die im Folgenden als Fenster 82 bezeichnet werden. Jedes Fenster 82 durchsetzt die Begrenzungswand 90 in ihrer Dickenrichtung vollständig. Beim Ausführungsbeispiel handelt es sich um Fenster 82 mit unterschiedlichen Funktionen. Zwei der Fenster 82, von denen allerdings insbesondere auch nur eines vorhanden sein kann, bilden jeweils ein Anzeigefenster 92a, 92b. Ein weiteres Fenster 82, von dem allerdings auch mehrere vorhanden sein können, bildet ein Sichtfenster 83. Ein abgewandeltes, nicht abgebildetes Ausführungsbeispiel weist keine Anzeigefenster, sondern nur ein oder mehrere Sichtfenster 83 auf.

Damit die Wandung des Verschlussdeckels 7 trotz der Fenster 82 insgesamt dicht geschlossen ist, ist jedem Fenster 82 ein Verschlussmittel 92 zugeordnet, das eine weitere Komponente des Verschlussdeckels 7 bildet und durch das das zugeordnete Fenster 82 fluiddicht verschlossen ist. Eine Besonderheit des Verschlussmittels 92 besteht darin, dass es zumindest im Falle des Sichtfensters 83 klar und durchsichtig ausgebildet ist. Im Falle des Anzeigefensters 92a, 92b genügt prinzipiell eine Lichtdurchlässigkeit ohne ausgeprägte Durchsichtigkeit, jedoch besteht es zweckmäßigerweise ebenfalls aus einem klaren, durchsichtigen Material. Jedes Verschlussmittel 92 besteht vorzugsweise aus einem keine Streuungseffekte hervorrufenden, klaren, durchsichtigen bzw. transparenten Material. Bevorzugt besteht jedes Verschlussmittel 92 aus transparentem Kunststoffmaterial, insbesondere aus Polypropylen

Bevorzugt dient jedes zumindest transluzent bzw. lichtdurchlässig und bevorzugt transparent bzw. durchsichtig verschlossene Anzeigefenster 92a, 92b zur Visualisierung mindestens eines Betriebszustandes der sich unter dem Verschlussdeckel 7 befindenden Ventileinheit 3. Außerdem ist jedem Anzeigefenster 92a, 92b zweckmäßigerweise jeweils eines von zwei von außen her zugänglich am Verschlussdeckel 7 angeordneten Handbetätigungsgliedern 94a, 94b zugeordnet, mit denen unabhängig von der elektrischen Ansteuerung eine manuelle Betätigung der Ventileinheit 3 ohne Abnehmen des Verschlussdeckels 7 möglich ist. Die Handbetätigungsglieder 94a, 94b können auch entfallen.

Jeder Ventileinheit 3 ist beim Ausführungsbeispiel eine zweckmäßigerweise der Anzahl von Antriebseinheiten 49a, 49b entsprechende Anzahl von nicht näher illustrierten Leuchtelementen zugeordnet, die Licht aussenden, wenn eine der Antriebseinheiten 49a, 49b elektrisch betätigt wird. Diese Leuchtelemente sind beim Ausführungsbeispiel Bestandteile des Signalübertragungsstranges 63, der sich in dem Signalübertragungskanal 64 erstreckt. Zweckmäßigerweise ist jedes Signalübertragungssegment 63a pro Ventilträgermodul 2a mit einer entsprechenden Anzahl von Leuchtelementen bestückt.

Im Innern des Aufnahmeraumes 27 befindet sich pro Antriebseinheit 49a, 49b mindestens ein als Lichtleiter 96 ausgebildetes Lichtausgabemittel 96a, 96b, das sich zwischen einem der Leuchtelemente und einem der Anzeigefenster 92a, 92b erstreckt. Exemplarisch sind die Lichtausgabemittel 96a, 96b jeweils stabförmig ausgebildet. Die Lichtausgabemittel 96a, 96b sind zweckmäßigerweise längsseits neben der Antriebseinrichtung 49 angeordnet, die eine geringere Baubreite hat als die Hauptventileinrichtung 43, so dass sich im Aufnahmeraum 27 neben der Antriebseinrichtung 49 ausreichend Platz zur Aufnahme der Lichtausgabemittel 96a, 96b befindet.

Die Lichtausgabemittel 96a, 96b sind von Lichtleitern gebildet, die das an der einen Stirnseite von den Leuchtelementen eingespeiste Licht zum jeweils zugeordneten Anzeigefenster 92a, 92b leiten. Jedes Lichtausgabemittel 96a, 96b hat einen Lichtausgabe-Endabschnitt 97a, der im Innern des Aufnahmeraumes 27 bis in die unmittelbare Nähe einer der lichtdurchlässigen und bevorzugt durchsichtigen Anzeigefenster 92a, 92b ragt.

Je nachdem, welche der Antriebseinheiten 49a, 49b elektrisch aktiviert wird, leuchtet entweder das eine oder andere Leuchtelement. Das hierbei emittierte Licht wird vom zugeordneten Lichtausgabemittel 96a, 96b zum zugeordneten Anzeigefenster 92a, 92b geleitet und tritt durch das zugeordnete Verschlussmittel 93 hindurch nach außen. Wenn die Leuchtelemente selbst in unmittelbarer Nähe der Anzeigefenster 92a, 92b platziert werden können, erübrigt sich die Verwendung von zwischengeschalteten Lichtleitern 96, so dass die Leuchtelemente unmittelbar selbst jeweils ein Lichtausgabemittel 96a, 96b definieren.

Das mindestens eine Sichtfenster 83, das den Deckelkörper 89 lokal durchsetzt, ist aufgrund einer entsprechenden Größe und aufgrund der Transparenz des zugeordneten Verschlussmittels 83 dafür geeignet, von außerhalb des Ventilträgers 2 her einen Einblick ins Innere des Aufnahmeraumes 27 hinein zu ermöglichen und hinter dem Verschlussmittel 83 im Innern des Aufnahmeraumes 27 befindliche Dinge gut zu erkennen.

Das mindestens eine Sichtfenster 83 dient insbesondere dem Zweck, ohne Entfernen des Verschlussdeckels 7 von außen her ein Erkennen oder Ablesen von Informationsmitteln 84 zu ermöglichen, die, insbesondere permanent, an der Ventileinheit 3 angeordnet sind.

Exemplarisch befinden sich solche Informationsmittel 84 an einer Oberseite 85 der Ventileinheit 3, die der Deckenwand 19 des Verschlussdeckels 7 zugewandt ist, welche sich - bevorzugt mit einem gewissen Höhenabstand - oberhalb der Ventileinheit 3 erstreckt. Die Informationsmittel 84 liegen dem Sichtfenster 83 mit Abstand gegenüber, insbesondere in der Achsrichtung der Hochachse 23, so dass man sie gemäß Pfeil 86 durch das durchsichtige Verschlussmittel 93 des Sichtfensters 83 hindurch gut mit dem bloßen Auge erkennen kann. Es ist auch vorteilhaft, das transparente Verschlussmittel 93 mit einer glatten Außenoberfläche zu versehen.

Um einen Lupeneffekt zu erzielen, kann die Außenoberfläche des Verschlussmittels 93 des betreffenden Fensters 82, insbesondere des Sichtfensters 83, eine konvexe Wölbung aufweisen. Dies gilt auch dann, wenn das Verschlussmittel 93 ein einstückiger Bestandteil eines Hüllkörpers 78 ist.

Es versteht sich, dass die Größe beziehungsweise der Öffnungsquerschnitt des Sichtfensters 83 ausreichend groß bemessen ist, um die zugeordneten Informationsmittel 84 gut erkennen zu können. Als besonders zweckmäßig hat es sich in diesem Zusammenhang erwiesen, eine rechteckige Kontur für das Sichtfenster 83 zu wählen.

Bei den dauerhaft an der Ventileinheit 3 angebrachten Informationsmitteln 84 handelt es sich exemplarisch um eine Typenbezeichnung für die Ventileinheit 3, wobei allerdings alternativ oder zusätzlich auch eine Bestellnummer der Ventileinheit angebracht sein kann. Die Informationsmittel 84 sind beispielsweise aufgedruckt oder aufgeklebt oder durch Spritzgießen angeformt oder auf sonstige Weise dauerhaft angebracht.

Bevorzugt sind die Informationsmittel 84 an dem Hauptventilgehäuse 46 angebracht.

Sollte sich im Betrieb der Ventilanordnung abzeichnen, dass eine Ventileinheit 3 in absehbarer Zeit ausgetauscht werden sollte, lässt sich bei laufendem Betrieb der Ventilanordnung 1 durch das Sichtfenster 83 hindurch die Typenbezeichnung und/oder Bestellnummer der Ventileinheit 3 ablesen, so dass beispielsweise ein Ersatzventil beschafft werden kann.

Das Zusammenspiel zwischen dem Sichtfenster 83 und den Informationsmitteln 84 ermöglicht überdies einen Verzicht auf die Anbringung von ventilspezifischen Informationsmitteln außen an dem Verschlussdeckel 7, der mithin universell verwendbar ist, so dass es keiner ventilspezifischen Bereitstellung von Verschlussdeckeln 7 bedarf.

Während sich beim Ausführungsbeispiel das Sichtfenster 83 ausschließlich im Bereich der Deckenwand 19 befindet, kann dieses oder ein weiteres Sichtfenster 83 durchaus auch an anderer Stelle des Deckelkörpers 89 platziert sein, wenn sich die abzulesenden Informationsmittel 84 an einer anderen Stelle der Ventileinheit 3 befinden. Es kann zum Beispiel an der seitlichen Umfangswand 15 ausgebildet sein.

Bei nicht illustrierten Ausführungsbeispielen sind die Verschlussmittel 93 so ausgebildet, dass sie entweder vollständig im Innern des zugeordneten Fensters 82 aufgenommen sind oder zur Gänze außerhalb der Fenster 82 an der Außenfläche 91 der Begrenzungswand 90 angebracht sind. Als besonders vorteilhaft wird allerdings die beim Ausführungsbeispiel realisierte Bauform angesehen, bei der jedes Verschlussmittel 93 partiell an der dem Aufnahmeraum 27 entgegengesetzten Außenfläche 91 der Begrenzungswand 90 angeordnet ist und sich darüber hinaus auch in das zugeordnete Fenster 82 hinein erstreckt.

Der außerhalb des Aufnahmeraumes 27 und der Anzeigedurchbrechungen 92a, 92b liegende Bestandteil der Verschlussmittel 93 ist zweckmäßigerweise so gestaltet, dass er einen größeren Umriss als das jeweils zugeordnete Fenster 82 hat. Auf diese Weise bedeckt das Verschlussmittel 93 die Außenfläche 91 auch um das jeweilige Fenster 82 herum in dem Randbereich der Begrenzungswand 90, der das zugeordnete Fenster 82 außen begrenzt. Mit einer solchen Ausgestaltung wird besonders effektiv verhindert, dass Verunreinigungen im Fügebereich zwischen dem Verschlussmittel 93 und dem Deckelkörper 89 hindurchtreten und in den Aufnahmeraum 27 eindringen.

Es ist prinzipiell möglich, jedes Verschlussmittel 93 so zu gestalten, dass es lediglich punktuell im Bereich der zugeordneten Anzeigedurchbrechung 92a, 92b angeordnet ist. In einem solchen Fall empfiehlt sich eine von der Begrenzungswand 90 weg konvex gewölbte Gestaltung des betreffenden Verschlussmittels 93, um eine gute Lichtverteilung zu erzielen.

Als besonders zweckmäßig wird die beim Ausführungsbeispiel realisierte Bauform angesehen, bei der jedes Verschlussmittel 93 ein einstückiger Bestandteil eines den Deckelkörper 89 im Bereich seiner Außenfläche 91 zumindest im Bereich der Begrenzungswand 90 und vorzugsweise in seiner Gesamtheit umhüllenden Hüllkörpers 78 ist, der an dem Deckelkörper 89 fixiert ist. Der Hüllkörper 78 besteht zumindest im Bereich des Sichtfensters 83 und vorzugsweise in seiner Gesamtheit aus einem klar durchsichtigen Material. Er besteht zweckmäßigerweise aus einem transparenten Kunststoffmaterial.

Der Hüllkörper 78 ist bevorzugt an der Außenfläche 91 des Deckelkörpers 89 befestigt. Vorzugsweise liegt hierbei eine stoffschlüssige Verbindung vor. Zweckmäßigerweise ist der Hüllkörper 78 ein Kunststoffkörper, der durch Spritzgießen unmittelbar durch Anspritzen an die Außenfläche 91 des Deckelkörpers 89 erzeugt wird.

Bevorzugt hat der Hüllkörper 78 durchweg eine konstante Wanddicke. Diejenigen Bereiche des Hüllkörpers 78, die ein Verschlussmittel 93 bilden, können eine größere Wanddicke haben, sodass sich dort ein erhabener Bereich ergibt. Dieser erhabene Bereich hat zweckmäßigerweise eine von der Begrenzungswand 90 weg konvex gewölbte Formgebung.

Der Hüllkörper 78 ist insbesondere so ausgebildet, dass er sich im Bereich der Stirnfläche 16 zumindest partiell um den dortigen Randbereich des Deckelkörpers 89 herum erstreckt. Auf diese Weise kann die Stirnfläche 16 zumindest partiell von dem Hüllkörper 78 gebildet sein.

Vorzugsweise ist der Hüllkörper 78 auch so ausgebildet, dass er mindestens ein Fenster 82 von außen her durchsetzt und die Begrenzungswand an ihrer Innenfläche 89 hintergreift.

Obgleich mindestens ein Fenster 82 prinzipiell auch in der seitlichen Umfangswand 15 des Verschlussdeckels 7 ausgebildet sein können, empfiehlt sich besonders die Ausbildung in der Deckenwand 19, weil sie hier auch dann problemlos sichtbar sind, wenn im Falle eines modularen Aufbaus des Ventilträgers 2 mehrere Verschlussdeckel 7 nebeneinander angeordnet sind.

Bei einem nicht gezeigten Ausführungsbeispiel erstreckt sich mindestens ein Fenster 82, insbesondere ein Sichtfenster 83, ununterbrochen sowohl in der Deckenwand 19 als auch in der Umfangswand 15.

Aus der Zeichnung ist ersichtlich, dass die beiden Anzeigefenster 92a, 92b zweckmäßigerweise in der Achsrichtung der Längsachse 22 auf einer Linie liegend und mit Abstand zueinander angeordnet sind.

Die schon erwähnten Handbetätigungsglieder 94a, 94b ermöglichen eine individuelle manuelle Betätigung der Antriebseinheiten 49a, 49b. Bevorzugt ist jedes Handbetätigungsglied 94a, 94b stößelartig ausgebildet und unter Abdichtung verschiebbar in einer individuellen Wanddurchbrechung 79a, 79b des Verschlussdeckels 7 gelagert. Jedes Handbetätigungsglied 94a, 94b ragt in den Aufnahmeraum 27 hinein und dort in die Nähe eines beweglichen Betätigungsabschnittes 80 einer der Antriebseinheiten 49a, 49b. Die Betätigungsabschnitte 80 sind so ausgebildet, dass sie ein Betätigen der zugeordneten Antriebseinheit 49a, 49b bewirken, wenn sie bewegt und insbesondere verschoben werden.

Jedes Handbetätigungsglied 94a, 94b hat eine von außerhalb des Verschlussdeckels 7 her zugängliche Betätigungsfläche 88, auf die mit dem Finger einer Hand oder mit einem einfachen Werkzeug eine Drückkraft ausgeübt werden kann, die zur Folge hat, dass das zugeordnete Handbetätigungsglied 94a, 94b unter Überwindung der Kraft einer Rückstellfeder 67 verschoben wird und auf den zugeordneten Betätigungsabschnitt 80 einwirkt, so dass die zugeordnete Antriebseinheit 49a, 49b manuell betätigt wird.

Die Handbetätigungsglieder 94a, 94b sind bevorzugt derart platziert, dass sich eine klare räumliche Zuordnung zu jeweils einem der beiden Anzeigefenster 92a, 92b ergibt. Insbesondere sind die beiden Handbetätigungsglieder 94a, 94b in Achsrichtung der Längsachse 22 auf einer Linie liegend derart mit Abstand zueinander angeordnet, dass jedes Handbetätigungsglied 94a in der Achsrichtung der Querachse 24 neben einem der Anzeigefenster 92a, 92b liegt.

## Patentansprüche

1. Ventilanordnung, mit einem Ventilträger (2) und mindestens einer eine elektrisch betätigbare Antriebseinrichtung (49) aufweisenden Ventileinheit (3), wobei die Ventileinheit (3) gekapselt in einem nach außen abgeschlossenen Aufnahmeraum (27) des Ventilträgers (2) untergebracht ist, der gemeinsam begrenzt ist von einem Grundkörper (6) des Ventilträgers (2), der mit der Ventileinheit (3) in Fluidverbindung stehende Ventilträger-Fluidkanäle (58) aufweist, und von einem an einer Montagefläche (10) des Grundkörpers (6) lösbar angebrachten Verschlussdeckel (7) des Ventilträgers (2), wobei der Verschlussdeckel (7) einen Deckelkörper (89) mit einer den Aufnahmeraum (27) unmittelbar begrenzenden lichtundurchlässigen Begrenzungswand (90) aufweist, die über wenigstens einen abgegrenzten lichtdurchlässigen Bereich verfügt, in dem sie lokal von mindestens einem Sichtfenster (83) durchsetzt ist, das durch ein an dem Deckelkörper (89) fixiertes Verschlussmittel (93) dicht verschlossen ist, **dadurch gekennzeichnet, dass** das Verschlussmittel aus einem klaren, durchsichtigen Material besteht, so dass von außen her durch das Sichtfenster (83) hindurch ein Einblick in den Aufnahmeraum (27) möglich ist, wobei die Ventileinheit (3) in einem dem Sichtfenster (83) gegenüberliegenden Bereich permanent angeordnete alphanumerische Informationsmittel (84) aufweist, die durch das Sichtfenster (83) hindurch von außerhalb des Aufnahmeraumes (27) her erkennbar sind.

2. Ventilanordnung nach Anspruch 1, **dadurch gekennzeichnet, dass** die Informationsmittel (84) eine Typenbezeichnung und/oder Bestellnummer der Ventileinheit (3) repräsentieren.

3. Ventilanordnung nach Anspruch 1 oder 2, **dadurch gekennzeichnet, dass** das Sichtfenster (83) rechteckig konturiert ist.

4. Ventilanordnung nach einem der Ansprüche 1 bis 3, **dadurch gekennzeichnet, dass** das durchsichtige Verschlussmittel (93) zumindest partiell im Innern des zugeordneten Sichtfensters (83) angeordnet ist.

5. Ventilanordnung nach einem der Ansprüche 1 bis 4, **dadurch gekennzeichnet, dass** das durchsichtige Verschlussmittel (93) zumindest partiell an der dem Aufnahmeraum (27) entgegengesetzten Außenfläche (91) der Begrenzungswand (90) des Deckelkörpers (89) angeordnet ist und dort einen größeren Umriss als das Sichtfenster (83) hat, so dass es an dieser Außenfläche (91) zumindest den das Sichtfenster (83) ringsum begrenzenden Randbereich der Begrenzungswand (90) des Deckelkörpers (89) bedeckt, wobei das Verschlussmittel (93) zweckmäßigerweise auch in das Sichtfenster (83) hineinragt.

6. Ventilanordnung nach einem der Ansprüche 1 bis 5, **dadurch gekennzeichnet, dass** das durchsichtige Verschlussmittel (93) ein einstückiger Bestandteil eines aus einem durchsichtigen Material bestehenden, an dem Deckelkörper (89) fixierten Hüllkörpers (78) ist, der den Deckelkörper (89) an seiner dem Aufnahmeraum (27) entgegengesetzten Außenfläche (91) zumindest im Bereich der Begrenzungswand (90) umhüllt, wobei er zweckmäßigerweise die gesamte Außenfläche (91) des Deckelkörpers (89) bedeckt.

7. Ventilanordnung nach Anspruch 6, **dadurch gekennzeichnet, dass** der Hüllkörper (78) ein durch Spritzgießen stoffschlüssig an die Außenfläche (91) des Deckelkörpers (89) angeformter durchsichtiger Kunststoffkörper ist, wobei zweckmäßigerweise der Deckelkörper (89) aus einem undurchsichtigen Kunststoffmaterial besteht.

8. Ventilanordnung nach einem der Ansprüche 1 bis 7, **dadurch gekennzeichnet, dass** der Verschlussdeckel (7) haubenförmig mit einer Deckenwand (19) und einer seitlich umlaufenden Umfangswand (15) ausgebildet ist, wobei sich das Sichtfenster (83) zweckmäßigerweise zumindest in der Deckenwand (19) befindet.

9. Ventilanordnung nach Anspruch 8 in Verbindung mit Anspruch 6 oder 7, **dadurch gekennzeichnet, dass** der haubenförmige Verschlussdeckel (7) einen zweischichtigen Aufbau hat, wobei eine innere Schicht aus dem Deckelkörper (89) und eine äußere Schicht aus dem Hüllkörper (78) besteht, wobei sowohl der Deckelkörper (89) als auch der Hüllkörper (78) haubenförmig gestaltet sind.

10. Ventilanordnung nach einem der Ansprüche 1 bis 9, **dadurch gekennzeichnet, dass** der Aufnahmeraum (27) teilweise im Grundkörper (6) und teilweise im Verschlussdeckel (7) ausgebildet ist, wobei er sich aus einem im Grundkörper (6) ausgebildeten Grundkörper-Innenraum (27a) und einem im Verschlussdeckel (7) ausgebildeten Verschlussdeckel-Innenraum (27b) zusammensetzt, wobei die Ventileinheit (3) mit einem unteren Teilabschnitt (38) in dem Grundkörper-Innenraum (27a) aufgenommen ist und mit einem aus dem Grundkörper (6) herausragenden oberen Teilabschnitt (39) in den Verschlussdeckel-Innenraum (27b) hineinragt.

11. Ventilanordnung nach einem der Ansprüche 1 bis 10, **dadurch gekennzeichnet, dass** die Ventileinheit (3) von elektro-fluidisch vorgesteuerter Bauart ist, wobei sie über eine Hauptventileinrichtung (43) und eine elektrisch betätigbare Antriebseinrichtung (49) in Gestalt einer zur Betätigung der Hauptventileinrichtung (43) dienenden Vorsteuerventileinrichtung (44) verfügt, wobei die Vorsteuerventileinrichtung (44) zweckmäßigerweise mindestens ein Vorsteuerventil (53a, 53b) umfasst und insbesondere mit zwei solchen Vorsteuerventilen (53a, 53b) ausgestattet ist.

12. Ventilanordnung nach einem der Ansprüche 1 bis 11, **dadurch gekennzeichnet, dass** in dem Ventilträger (2) zusätzlich zu dem Aufnahmeraum (27) ein vollständig im Grundkörper (6) ausgebildeter Signalübertragungsraum (64a) angeordnet ist, in dem sich elektrische Signalübertragungsmittel befinden, die mit der elektrisch betätigbaren Ventileinheit (3) elektrisch kontaktiert sind.

13. Ventilanordnung nach einem der Ansprüche 1 bis 12, **dadurch gekennzeichnet, dass** der Ventilträger (2) einen modularen Aufbau hat und mehrere in einer Aufreihungsrichtung (5) aneinandergereihte Ventilträgermodule (2a) aufweist, die jeweils einen Grundkörper (6) und einen Verschlussdeckel (7) aufweisen, die gemeinsam einen mit einer Ventileinheit (3) bestückten Aufnahmeraum (27) definieren, wobei die Ventilträgermodule (2a) mit ihren Grundkörpern (6) aneinandergesetzt sind.

14. Ventilanordnung nach Anspruch 13, **dadurch gekennzeichnet, dass** im Grundkörper (6) jedes Ventilträgermoduls (2a) mehrere Ventilträger-Fluidkanäle (57) ausgebildet sind, die in den Aufnahmeraum (27) einmünden, wobei zumindest einige dieser Ventilträger-Fluidkanäle (57) auch zu den beiden einander entgegengesetzt in der Aufreihungsrichtung (5) orientierten Seitenflächen des jeweiligen Grundkörpers (6) ausmünden und unter Bildung eines den Ventilträger (2) durchziehenden Ventilträger-Durchgangsfluidkanals (58) mit einem Ventilträger-Fluidkanal (57) des daran angesetzten Ventilträgermoduls (2a) kommunizieren.

15. Ventilanordnung nach Anspruch 13 oder 14, **dadurch gekennzeichnet, dass** in jedem Grundkörper (6) ein Signalübertragungsraum (64a) ausgebildet ist, der zu den beiden einander entgegengesetzt in der Aufreihungsrichtung (5) orientierten Seitenflächen des jeweiligen Grundkörpers (6) ausmündet, wobei die Signalübertragungsräume (64a) jeweils unmittelbar benachbarter Grundkörper (6) unter Bildung eines den Ventilträger (2) durchziehenden Signalübertragungskanals (64) miteinander verbunden sind und wobei sich in dem Signalübertragungskanal (64) ein Signalübertragungsstrang (63) erstreckt, der mit der elektrisch betätigbaren Antriebseinrichtung (49) der Ventileinheit (3) jedes Ventilträgermoduls (2a) elektrisch kontaktiert ist.

## Claims

1. Valve assembly, with a valve carrier (2) and at least one valve unit (3) with an electrically actuable drive device (49), wherein the valve unit (3) is accommodated in an encapsulated manner in a mounting space (27), sealed from the outside, of the valve carrier (2), which is jointly bounded by a base body (6) of the valve carrier (2), which has valve carrier fluid passages (58) in fluidic connection with the valve unit (3), and by a cover plate (7) of the valve carrier (2), releasably attached to a mounting surface (10) of the base body (6) wherein the cover plate (7) has a cover body (89) with an opaque boundary wall (90) immediately bounding the mounting space (27) and having at least one delimited light-transmissive area through which there passes locally at least one inspection window (83) which is tightly sealed by a sealing means (93) fixed to the cover body (89), **characterised in that** the sealing means is made of a clear transparent material so that it is possible to look from the outside through the inspection window (83) into the mounting space (27), wherein the valve unit (3) has in an area opposite the inspection window (83) permanently provided alphanumerical information means (84) which are discernible through the inspection window (83) from outside the mounting space (27).

2. Valve assembly according to claim 1, **characterised in that** the information means (84) represent a type designation and/or order number of the valve unit (3).

3. Valve assembly according to claim 1 or 2, **characterised in that** the inspection window (83) is rectangular in shape.

4. Valve assembly according to any of claims 1 to 3, **characterised in that** the transparent sealing means (93) is provided at least partly in the interior of the assigned inspection window (83).

5. Valve assembly according to any of claims 1 to 4, **characterised in that** the transparent sealing means (93) is provided at least partly located on the outer face (91) of the boundary wall (90) of the cover body (89) opposite the mounting space (27) where they have a larger outline than the inspection window (83), so that on this outer face (91) they at least cover the boundary zone of the boundary wall (90) of the cover body (89) bordering the inspection window (83) all-round, while the sealing means (93a, 93b) also extends expediently into the inspection window (83).

6. Valve assembly according to any of claims 1 to 5, **characterised in that** the transparent sealing means (93) is an integral part of a sleeve body (78) made of a transparent material fixed to the cover body (89) and enveloping the exterior of the cover body (89) at its outer face (91) opposite the mounting space (27) at least in the area of the boundary wall (90), wherein it covers expediently the whole outer face (91) of the cover body (89).

7. Valve assembly according to claim 6, **characterised in that** the sleeve body (78) is a transparent plastic body moulded with material bonding by injection moulding to the outer surface (91) of the cover body (89), wherein expediently the cover body (89) is made of an opaque plastic material.

8. Valve assembly according to any of claims 1 to 7, **characterised in that** the cover plate (7) is hood-shaped with a top panel (19) and a continuous side peripheral wall (15), wherein the inspection window (83) is expediently provided at least in the top panel (19).

9. Valve assembly according to claim 8 in conjunction with claim 6 or 7, **characterised in that** the hood-shaped cover plate (7) has a two-layer structure, wherein an inner layer is comprised of the cover body (89) and an outer layer of the sleeve body (78), wherein both the cover body (89) and the sleeve body are hood-shaped in form.

10. Valve assembly according to any of claims 1 to 9, **characterised in that** the mounting space (27) is formed partly in the base body (6) and partly in the cover plate (7), wherein it is comprised of a base body interior (27a) formed in the base body (6) and a cover plate interior (27b) formed in the cover plate (7), wherein the valve unit (3) is held with a lower portion (38) in the base body interior (27a) and with an upper portion (39) extending out of the base body (6) into the cover plate interior (27b).

11. Valve assembly according to any of claims 1 to 10, **characterised in that** the valve unit (3) is of the electro-fluidically piloted type, wherein it has a main valve unit (43) and an electrically actuable drive device (49) in the form of a pilot valve unit (44) serving to actuate the main valve unit (43), wherein the pilot valve unit (44) expediently includes at least one pilot valve (53a, 53b) and in particular is equipped with two such pilot valves (53a, 53b).

12. Valve assembly according to any of claims 1 to 11, **characterised in that** there is provided in the valve carrier (2), in addition to the mounting space (27), a signal transmission space (64a) formed completely in the base body (6) and in which are to be found signal transmission means which are electrically contacted by the electrically actuable valve unit (3).

13. Valve assembly according to any of claims 1 to 12, **characterised in that** the valve carrier (2) has a modular structure, with several valve carrier modules (2a) lined up side by side in a direction of lining-up (5), each having a base body (6) and a cover plate (7) and jointly defining a mounting space (27) equipped with a valve unit (3), wherein the valve carrier modules (2a) are arranged with their base bodies (6) side-by-side.

14. Valve assembly according to claim 13, **characterised in that** there are formed in the base body (6) of each valve carrier module (2a) several valve carrier fluid passages (57) which lead into the mounting space (27), wherein at least some of these valve carrier fluid passages (57) also open out at the two side faces of the respective base body (6) oriented opposite to the direction of lining-up (5) and, forming a valve carrier through fluid passage (58) which passes through the valve carrier (2), communicate with a valve carrier fluid passage (57) of the valve carrier module (2a) attached thereto.

15. Valve assembly according to claim 13 or 14, **characterised in that** there is formed in each base body (6) a signal transmission space (64a) which opens out at the two side faces of the respective base body (6) oriented opposite to the direction of lining-up (5), wherein the signal transmission spaces (64a) of each directly adjacent base body (6) are connected to one another to form a signal transmission passage (64) passing through the valve carrier (2), and wherein a signal transmission line (63) extends in the signal transmission passage (64) and is electrically contacted by the electrically actuable drive device (49) of the valve unit (3) of each valve carrier module (2a).

## Revendications

1. Ensemble formant soupape, avec un support de soupape (2) et au moins une unité de soupape (3) présentant un dispositif d'entraînement (49) pouvant être actionné électriquement, dans lequel l'unité de soupape (3) est abritée de manière encapsulée dans un espace de réception (27), fermé par rapport à l'extérieur, du support de soupape (2), qui est délimité conjointement par un corps de base (6) du support de soupape (2), qui présente des canaux de fluide de support de soupape (58) en communication fluidique avec l'unité de soupape (3), et par un couvercle de fermeture (7), installé de manière amovible au niveau d'une surface de montage (10) du corps de base (6), du support de soupape (2), dans lequel le couvercle de fermeture (7) présente un corps de couvercle (89) avec une paroi de délimitation (90) opaque délimitant directement l'espace de réception (27), qui dispose d'au moins une zone délimitée laissant passer la lumière, dans laquelle elle est traversée localement par au moins une fenêtre d'inspection, (83), qui est fermée de manière étanche par un moyen de fermeture (93) fixé au niveau du corps de couvercle (89), **caractérisé en ce que** le moyen de fermeture est constitué d'un matériau clair, transparent, de sorte qu'un regard est possible dans l'espace de réception (27) depuis l'extérieur à travers la fenêtre d'inspection (83), dans lequel l'unité de soupape (3) présente des moyens d'information (84) alphanumériques disposés en permanence dans une zone faisant face à la fenêtre d'inspection (83), qui peuvent être identifiés à travers la fenêtre d'inspection (83) depuis l'extérieur de l'espace de réception (27).

2. Ensemble formant soupape selon la revendication 1, **caractérisé en ce que** les moyens d'information (84) représentent un libellé de type et/ou un numéro de commande de l'unité de soupape (3).

3. Ensemble formant soupape selon la revendication 1 ou 2, **caractérisé en ce que** la fenêtre d'inspection (83) est délimitée de manière rectangulaire.

4. Ensemble formant soupape selon l'une quelconque des revendications 1 à 3, **caractérisé en ce que** le moyen de fermeture (93) transparent est disposé au moins en partie à l'intérieur de la fenêtre d'inspection (83) associée.

5. Ensemble formant soupape selon l'une quelconque des revendications 1 à 4, **caractérisé en ce que** le moyen de fermeture (93) transparent est disposé au moins en partie au niveau de la face extérieure (91), opposée à l'espace de réception (27), de la paroi de délimitation (90) du corps de couvercle (89) et a à ce niveau une délimitation plus grande que la fenêtre d'inspection (83) de sorte qu'il recouvre au niveau de ladite face extérieure (91) au moins la zone de bord, délimitant tout autour la fenêtre d'inspection (83), de la paroi de délimitation (90) du corps de couvercle (89), dans lequel le moyen de fermeture (93) dépasse de manière appropriée également dans la fenêtre d'inspection (83).

6. Ensemble formant soupape selon l'une quelconque des revendications 1 à 5, **caractérisé en ce que** le moyen de fermeture (93) transparent fait partie intégrante d'un seul tenant d'un corps enveloppant (78) constitué d'un matériau transparent, fixé au niveau du corps de couvercle (89), qui enveloppe le corps de couvercle (89) au niveau de sa face extérieure (91) opposée à l'espace de réception (27) au moins dans la zone de la paroi de délimitation (90), dans lequel il recouvre de manière appropriée la totalité de la face extérieure (91) du corps de couvercle (89).

7. Ensemble formant soupape selon la revendication 6, **caractérisé en ce que** le corps enveloppant (78) est un corps en matière plastique transparent formé par moulage par injection par liaison de matière au niveau de la face extérieure (91) du corps de couvercle (89), dans lequel de manière appropriée le corps de couvercle (89) est constitué d'un matériau de matière plastique non transparent.

8. Ensemble formant soupape selon l'une quelconque des revendications 1 à 7, **caractérisé en ce que** le couvercle de fermeture (7) est réalisé en forme de capot avec une paroi de recouvrement (19) et une paroi périphérique (15) s'étendant en périphérie latéralement, dans lequel la fenêtre d'inspection (83) se trouve de manière appropriée au moins dans la paroi de recouvrement (19).

9. Ensemble formant soupape selon la revendication 8 en lien avec la revendication 6 ou 7, **caractérisé en ce que** le couvercle de fermeture (7) en forme de capot a une structure à deux couches, dans lequel une couche intérieure est constituée du corps de couvercle (89) et une couche extérieure est constituée du corps enveloppant (78), dans lequel à la fois le corps de couvercle (89) et le corps enveloppant (78) sont configurés en forme de capot.

10. Ensemble formant soupape selon l'une quelconque des revendications 1 à 9, **caractérisé en ce que** l'espace de réception (27) est réalisé en partie dans le corps de base (6) et en partie dans le couvercle de fermeture (7), dans lequel il se compose d'un espace intérieur de corps de base (27a) réalisé dans le corps de base (6) et d'un espace intérieur de couvercle de fermeture (27b) réalisé dans le couvercle de fermeture (7), dans lequel l'unité de soupape (3) est reçue avec une section partielle inférieure (38) dans l'espace intérieur de corps de base (27a) et avec une section partielle supérieure (39) dépassant du corps de base (6) dans l'espace intérieur de couvercle de fermeture (27b).

11. Ensemble formant soupape selon l'une quelconque des revendications 1 à 10, **caractérisé en ce que** l'unité de soupape (3) est du type pilote de manière électrofluidique, dans lequel elle dispose d'un dispositif de soupape principale (43) et d'un dispositif d'entraînement (49) pouvant être actionné de manière électrique sous la forme d'un dispositif de soupape pilote (44) servant à l'actionnement du dispositif de soupape principale (43), dans lequel le dispositif de soupape pilote (44) comprend de manière appropriée au moins une soupape pilote (53a, 53b) et est équipé en particulier de deux soupapes pilotes (53a, 53b) de ce type.

12. Ensemble formant soupape selon l'une quelconque des revendications 1 à 11, **caractérisé en ce qu'**est disposé dans le support de soupape (2) en supplément de l'espace de réception (27) un espace de transmission de signaux (64a) réalisé totalement dans le corps de base (6), dans lequel se trouvent des moyens de transmission de signaux électriques, qui sont mis en contact électrique avec l'unité de soupape (3) pouvant être actionnée électriquement.

13. Ensemble formant soupape selon l'une quelconque des revendications 1 à 12, caractérisé ne ce que le support de soupape (2) a une structure modulaire et présente plusieurs modules de support de soupape (2a) alignés les uns les autres dans une direction d'alignement (5), qui présentent respectivement un corps de base (6) et un couvercle de fermeture (7), qui définissent conjointement un espace de réception (27) équipé d'une unité de soupape (3), dans lequel les modules de support de soupape (2a) sont placés les uns contre les autres par leurs corps de base (6).

14. Ensemble formant soupape selon la revendication 13, **caractérisé en ce que** sont réalisés dans le corps de base (6) de chaque module de support de soupape (2a) plusieurs canaux de fluide de support de soupape (57), qui débouchent dans l'espace de réception (27), dans lequel au moins certains desdits canaux de fluide de support de soupape (57) débouchent également vers les deux faces latérales, orientées de manière opposée l'une à l'autre dans la direction d'alignement (5), du corps de base (6) respectif et communiquent en formant un canal de fluide de passage de support de soupape (58) traversant le support de soupape (2) avec un canal de fluide de support de soupape (57) du module de support de soupape (2a) placé au niveau de celui-ci.

15. Ensemble formant soupape selon la revendication 13 ou 14, **caractérisé en ce qu'**est réalisé dans chaque corps de base (6) un espace de transmission de signaux (64a), qui débouche vers les deux faces latérales, orientées de manière opposée l'une à l'autre dans la direction d'alignement (5), du corps de base (6) respectif, dans lequel les espaces de transmission de signaux (64a) de corps de base (6) respectivement directement adjacents sont reliés les uns aux autres en formant un canal de transmission de signaux (64) traversant le support de soupape (64) et dans lequel s'étend dans le canal de transmission de signaux (64) un brin de transmission de signaux (63), qui est mis en contact électrique avec le dispositif d'entraînement (49), pouvant être actionné électriquement, de l'unité de soupape (3) de chaque module de support de soupape (2a).
